(19) Europäisches Patentamt
European Patent Office
Office européen des brevets

(11) Veröffentlichungsnummer: **0 451 576 A2**

# (12) EUROPÄISCHE PATENTANMELDUNG

(21) Anmeldenummer: **91104538.3**

(51) Int. Cl.[5]: **G01N 27/333**

(22) Anmeldetag: **22.03.91**

(30) Priorität: **09.04.90 DE 4011482**

(43) Veröffentlichungstag der Anmeldung:
**16.10.91 Patentblatt 91/42**

(84) Benannte Vertragsstaaten:
**CH FR GB IT LI**

(71) Anmelder: **LEOPOLD SIEGRIST GMBH**
**An der Tagweide 6**
**W-7500 Karlsruhe(DE)**

(72) Erfinder: **Heckmann, Klaus, Prof. Dr.**
**Zum Aichahof 20**
**W-8411 Pettendorf(DE)**
Erfinder: **Strnad, Jiri, Dr.**
**Carl-Thiel-Str. 12**
**W-8400 Regensburg(DE)**

(74) Vertreter: **Kraus, Walter, Dr. et al**
**Patentanwälte Kraus, Weisert & Partner**
**Thomas-Wimmer-Ring 15**
**W-8000 München 22(DE)**

## (54) Nitratselektive Membran.

(57) Es wurde eine $NO_3^-$ -selektive Membran zum Einsatz in $NO_3^-$ -sensitive Elektroden entwickelt. Die Membran enthält Salze hydrophober organischer Kationen mit anionischen Hexanitratokomplexen vierwertiger Metallionen. Diese Salze sind in einem Membrangrundgerüst aus einem gleichfalls hydrophoben Polymer gelöst.

EP 0 451 576 A2

Die Erfindung betrifft eine nitratselektive Membran zum Einsatz in nitratsensitiven Elektroden.

Die zunehmende Belastung von Trinkwasser mit Nitrat verlangt die Installation einer zunehmenden Anzahl von Meßstellen, und dies wiederum macht die Entwicklung eines sensitiven (d.h. empfindlichen), möglichst selektiven, handlichen und preiswerten Sensors erforderlich, der Nitratkonzentrationen **kontinuierlich** zu messen gestattet.

Die Messung von Nitratkonzentrationen im Batch-Verfahren, wie sie zum Repertoir der chemischen Analytik gehört, mag zwar genauer sein als die kontinuierliche Messung mit Hilfe von Sensoren; sie ist aber für die hier betrachteten Einsatzgebiete zu aufwendig, teuer und langsam.

Sensoren mit hinreichender **Sensitivität** befinden sich bereits im Handel. Es sind dies Membranelektroden, deren Membran aus irgendeinem festen oder flüssigen Anionenaustauschermaterial auf organisch-chemischer Basis besteht.

Die **Selektivität** der bisher erhältlichen Membranen ist aber für Anionen ganz allgemein - und für Nitrat speziell - nicht besonders hoch. Die Selektivität folgt in der Regel der Hofmeister-Reihe, welche lediglich relative Maße für die freien Hydratationsenergien der Anionen angibt. Dieses Verhalten beobachtet man praktisch bei allen Anionenaustauschern mit quartärem Stickstoff, unabhängig von der im Einzelfall vorliegenden Struktur der Ammoniumgruppe. Will man höhere Selektivitäten für Anionen bekommen, so muß man nach kationischen Gruppen suchen, welche mit den angebotenen Anionen zwar spezifische Bindungen eingehen, in denen das Anion jedoch immer noch eine nennenswerte Austauschrate besitzt. Zu diesen Verbindungen zählen u.a. einige Solvatkomplexe von Metallionen.

Die Auswahl an Solvatkomplexen dieser Art, in denen das $NO_3^-$ Ion gerade die richtige Bindungsfestigkeit besitzt, scheint nicht besonders groß zu sein. Es wurden darum die $NO_3^-$-selektiven Membranen bisher nach nur wenigen physikalischchemischen Konstruktionsprinzipien entwickelt. So wurden verwendet: Die Phenanthrolin-Komplexe von $Ni^{2+}$ und $Fe^{2+}$ sowie entsprechende Komplexe von Bipyridin, Bichinolin, Dipyridyl und Chlorophyll. Das hierin gebundene Metallion verfügt noch über freie positive Ladungen oder über koordinative Bindungsstellen, die dann zur Anlagerung von $NO_3^-$ führen. Infolge der großen Zahl von Kohlenstoffatomen in relativ unpolarer Bindung sind diese Verbindungen ziemlich hydrophob. Sie lassen sich deshalb gut in einer hydrophoben Membran-Matrix lösen. In allen diesen Fällen sind die $NO_3^-$-Ionen in Ligandenfeldern von verhältnismäßig geringer Symmetrie gebunden.

Die am häufigsten benutzten Substanzen sind die einfachen Nitrate der oben bereits implizit erwähnten und gleichfalls hydrophoben Tetraalkylammonium-Kationen.

Hierzu zählen auch die verschiedenen Substanzen, die unter dem Handelsnamen "Aliquat" zusammengefaßt und aus der Phasentransferkatalyse bekannt sind. Anstelle des quartären Stickstoffs können auch andere Atome mit positiver Ladung wie Phosphor oder Zinn oder Jod oder andere positiv geladene Gruppen wie Phosphiniminium stehen.

In leichter Abwandlung dieses Prinzips wurden auch die Kationen von Triphenylmethan-Farbstoffen herangezogen, die gleichfalls ausgeprägt hydrophob sind. Ähnlich verhält sich auch die Substanz "Nitron" (ein Guanidinium-Abkömmling), die durch Einbau von Phenylgruppen hydrophob gemacht geworden ist. Sie bildet mit $NO_3^-$-Ionen einen in Wasser schwerlöslichen Niederschlag und findet darum als Fällungsreagenz für Salpetersäure Verwendung.

Zwei weitere Substanzen ergeben eine recht gute $NO_3^-$-Selektivität, ohne daß man recht wüßte, warum sie das tun: Es sind dies das Silbersalz des Diethyldithiocarbamats und die Antimonsäure. Schließlich wurden auch einfache Metallnitrate benutzt, speziell Uranylnitrat, das in Gegenwart von Phosphinoxid als Komplexbildner öllöslich wird.

Auf diese verschiedenen Weisen wurden Membranelektroden hergestellt, die $NO_3^-$-Ionen bis hinunter zu recht geringen Konzentrationen (zwischen $10^{-5}$ und $10^{-6}$ M) zu messen gestatten und die auch eine gewisse Selektivität für $NO_3^-$ besitzen, wenn die Konzentration an Fremdelektrolyt relativ niederig bleibt. Die $NO_3^-$-Selektivität sinkt aber stets mit zunehmender Fremdelektrolytkonzentration.

Es wäre darum wünschenswert, eine $NO_3^-$-sensitive Membran zu besitzen, die ihre Selektivität auch bei vergleichsweise hohen Konzentrationen an Fremdelektrolyt noch beibehält. Wir haben darum Membranen hergestellt, welche Hexanitratokomplexe mehrwertiger Metallkationen, also z.B. die anionischen Komplexe von $U^{4+}$, $Th^{4+}$ und $Ce^{4+}$ mit der Formel $[Me(NO_3)_6]^{2-}$ enthalten, wobei Me für das vierwertige Kation steht. Diese Komplexe besitzen ein sehr symmetrisches oktaedrisches Ligandenfeld, und die Bindungskonstanten der einzelnen $NO_3^-$-Ionen sind nicht besonders groß. Sie bilden, wie wir gefunden haben, zusammen mit großen hydrophoben organischen Kationen Niederschläge mit besonders guter Löslichkeit in schwach polaren organischen Lösungsmitteln.

Der vorliegenden Erfindung liegt also die Aufgabe zugrunde, eine möglichst selektive, handliche und preiswerte nitratsensitive Membran zu Verfügung zu stellen. Die Membran soll auf einfache Weise herzustellen sein und geringe Störanfälligkeit gegenüber Fremdionen, insbesondere Halogenidionen, zeigen sowie lange Standzeiten in wäßrigen verdünnten Lösungen besitzen. Die Membran soll leicht zu handhaben sein, ihre Reißfestigkeit und ihre Steifigkeit müssen sich variieren und den jeweils praktischen Verhältnissen anpassen lassen. Diese Aufgabe wird dadurch gelöst, daß ein anionisches Komplexion vom Typ $[Me(NO_3)_6]^{2-}$ in eine Grundstruktur aus hydrophobem Material eingebracht wird, wobei die Wahl der Grundstruktur nicht Gegenstand der Erfindung ist. Derartige Grundstrukturen von Membranen werden beispielsweise in der Literaturstelle (1) beschrieben. Auf die Offenbarung dieser Literaturstelle wird expressis verbis Bezug genommen. In dieser Literaturstelle werden die verschiedenen hydrophoben Materialien, die für Membran-Grundstrukturen verwendet werden können, ausführlich beschrieben. Selbstverständlich gibt es weitere zahlreiche Literaturstellen, die sich mit der Herstellung von Membran-Grundstrukturen aus hydrophobem Material beschäftigen. Alle derartigen Membran-Grundstrukturen können bei der vorliegenden Erfindung eingesetzt werden. Bei der Grundstruktur aus hydrophobem Material handelt es sich entweder um eine vernetzte oder unvernetzte polymere Gerüstsubstanz oder um eine Flüssigkeit, die zwischen zwei dünnen Folien oder in den Poren eines polymeren Trägers eingeschlossen ist. Die letztere Variante nennt man "Flüssigmembran". Natürlich müssen die negativen Ladungen der Komplexe $[Me(NO_3)_6]^{2-}$ im Inneren der Membran durch Kationen elektrostatisch kompensiert sein; aber auch die Wahl der zur elektrostatischen Kompensation benötigten Kationen ist nicht Teil der Erfindung (1). Es können dies, wie bei jeder Anionenaustauschermembran, entweder Festladungen und somit Bestandteile der polymeren Gerüstsubstanz der Membran sein, oder aber beliebige organische Kationen, die in Gegenwart von wäßrigen Lösungen einen hohen Verteilungskoeffizienten zugunsten einer schwach polaren Phase besitzen und sich darum in der hydrophoben Grundstruktur der Membran gut lösen.

Mit der erfindungsgemäßen Membran kann die Nitrat-Konzentration bis hinab zu $5 \cdot 10^{-6}$ M reproduzierbar gemessen werden. Der lineare Bereich der Funktion Potential/log $[NO_3^-]$ erstreckt sich von $2 \cdot 10^{-5}$ M bis 1 M und die Standzeiten der Membran betragen mehrere Wochen. Die Selektivität der erfindungsgemäßen Membran ist überraschend gut, wobei aber der Begriff "Selektivität" einer Erläuterung bedarf: "Selektivität" soll ein Maß für die Unempfindlichkeit der Membran gegen die Anwesenheit von Fremdionen (Interferenzionen) oder - mit anderen Worten - ein Maß dafür sein, wie weit die Membran das zu bestimmende Ion anderen Ionen gegenüber bevorzugt. Die Selektivität ist für jedes Fremdion verschieden groß, wird auf das zu bestimmende Ion bezogen und darum in der physikalisch-chemischen Fachliteratur als "Selektivitätsverhältnis" angegeben (1). Dies ist aber für praktische Bedürfnisse eine zu komplizierte Größe, da sie nochmals von der Konzentration eines jeden Fremdions abhängt. Die zur Beschreibung von selektiven Membranen publizierten Selektivitätsverhältnisse sind darum nur schlecht miteinander vergleichbar. Die Elektrodenhersteller haben daher für die Charakterisierung ihrer Membranen andere Merkmale gewählt. Beispielsweise gibt die Firma Ingold diejenige Konzentration eines Fremdions (z.B. $Br^-$) an, welche bei einer Konzentration des Meßions (hier $NO_3^-$ ) von $10^{-3}$ M einen Meßfehler von 10 % verursacht. Für die $NO_3^-$ -Elektrode von Ingold ist diese $Br^-$-Konzentration $8 \cdot 10^{-4}$ M (2). Für die erfindungsgemäße $NO_3^-$ -Elektrode ist diese Konzentration $7 \cdot 10^{-3}$ M, also fast 10fach höher. Das bedeutet, daß die erfindungsgemäße Elektrode ca. 10mal weniger störanfällig gegenüber $Br^-$ ist als die von Ingold angebotene Elektrode. Für die entsprechende $NO_3^-$ -Elektrode der Firma Metrohm sind zwar keine Daten veröffentlicht; die Selektivität stimmt jedoch mit derjenigen der Ingold-Elektrode praktisch überein.

Zur Herstellung der erfindungsgemäßen Membran wird zuerst ein Hexanitratokomplex $[Me(NO_3)_6]^{2-}$ gebildet. Me bedeutet hier, wie gesagt, ein vierwertiges Metallion. Beispiele dafür sind $U^{4+}$ - (oxidationsempfindlich), $Ce^{4+}$ - (reduktionsempfindlich), $Th^{4+}$ (stabil). Die Herstellung geschieht einfach dadurch, daß man die entsprechenden Nitrate $U(NO_3)_4$, $Ce(NO_3)_4$ oder $Th(NO_3)_4$ in konzentrierter Salpetersäure oder in konzentrierter wäßriger Lösung von z.B. $NH_4NO_3$ auflöst. Die Hexanitratokomplexe bilden sich dann spontan. Natürlich lassen sich auch andere Salze derselben Kationen hierzu verwenden, so z.B. Chloride oder Sulfate. Nur muß man dann mit geringen entsprechenden Verunreinigungen in den am Ende vorliegenden Präzipitaten rechnen.

Die Hexanitratokomplexe werden dann mit dem Nitrat eines hydrophoben organischen Kations, z.B. mit einem Tetraalkylammoniumnitrat ausgefällt. Natürlich lassen sich außer den Nitraten auch andere Salze verwenden, z.B. Halogenide oder Sulfate; nur enthalten dann die entsprechenden Niederschläge neben Nitrationen auch die anderen Anionen als mehr oder weniger störende Verunreinigung. Das getrocknete Präzipitat läßt sich nach bekannten Verfahren zu Membranen verarbeiten, wie sie in der entsprechenden Fachliteratur beschrieben sind (1). Am einfachsten zu handhaben sind dabei solche Verfahren, bei denen das Nitrat des hydrophoben organischen Kations in einem hydrophoben organischen Polymer gelöst und dann mit diesem zusammen zu Membranen gegossen wird - evtl. unter Zuhilfenahme eines niedermolekularen Lösungsmittels, das nach dem Gießen verdampft, und

unter Zuhilfenahme eines Weichmachers, der nach dem Verdampfen des Lösungsmittels in der Membran verbleibt. Von diesen an sich bekannten Verfahren wählten wir eines, bei dem die Grundstruktur der Membran aus einer polymeren Gerüstsubstanz besteht, nämlich aus Polyvinylchlorid.

Auf diese Weise lassen sich die Dicke und die Fläche der Membran kontinuierlich variieren und darum frei wählen. Reißfestigkeit und Steifigkeit können durch die Änderung der Menge an Weichmacher geändert werden. Der Fachmann kann also leicht die für ihn geeignete Membran herstellen.

Die Membran läßt sich in beliebigen käuflichen und selbst hergestellten Elektroden einsetzen, soweit diese ebenfalls Membranen als ionenselektive Elemente enthalten. Man hat gegebenenfalls nur die käuflichen Membranen durch die neuen Membranen zu ersetzen. Es ist für den Fachmann ersichtlich, daß solche mit nitratselektiven Membranen bestückte Elektroden genau die Anforderungen erfüllen, die an einen Sensor gestellt werden, der auf einfache Weise und im kontinuierlichen Betrieb Nitratkonzentrationen zu messen hat.

**Literaturverzeichnis**

(1) K. Cammann, Das Arbeiten mit ionenselektiven Elektroden, Springer-Verlag Berlin, 1973.
(2) Ingold-Katalog 1989, S. 54, "Ionensensitive Elektroden mit Ionenaustauschermembran".

Beispiel 1

Es werden 50 ml 1,8•$10^{-3}$ M $Th(NO_3)_4$ in 6 M $HNO_3$ vorgelegt: dazu werden zur Fällung 50 mg Dicetyldimethylammoniumbromid gegeben. Die so erhaltene Suspension wird auf 40-50 °C erwärmt, ca. 2 h lang mit Ultraschall behandelt, danach abgenutscht, mit 200 ml $H_2O$ nachgespült und im Vakuum getrocknet. Das Präzipitat hat dann die Zusammensetzung:

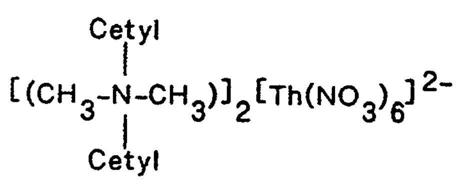

mit der Molmasse von 1592.

20 mg des Präzipitats werden mit 1,3 g Polyvinylchlorid-Pulver und 2,0 g Dibutylphthalat (als Weichmacher) vermischt und in etwa 20 ml Tetrahydrofuran (THF) gelöst. Die klare, dickflüssige Lösung wird auf eine Petrischale (Ø ca. 12 cm) gegossen. Nach 24 h ist das THF verdunstet und es entsteht eine klare, durchsichtige Membran. Sie läßt sich vom Glas ohne Schwierigkeit abziehen und ist mechanisch gut zu handhaben.

Beispiel 2 (Abb. 1)

Es wird das Potential der nitratselektiven Membran als Funktion der inneren und der äußeren $KNO_3$-Konzentration dargestellt, also die Kennlinie der Membran. Im linearen Bereich beträgt die Steigung 59 mV. Der lineare Bereich erstreckt sich bis zu 1,5 bis 2,0•$10^{-5}$ mol/l $KNO_3$. Die Nitratkonzentration kann jedoch bis zu 5•$10^{-6}$ mol/l $NO_3^-$ bestimmt werden.

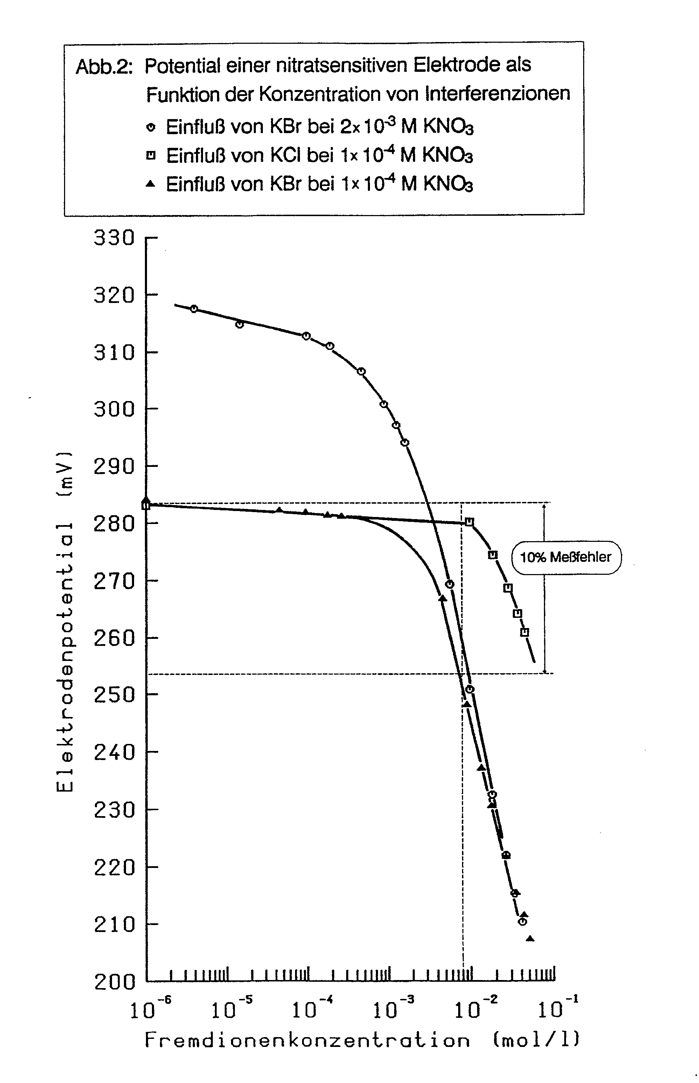

Beispiel 3 (Abb. 2)

Es ward der Einfluß von Fremdionen auf das Potential der Membran beschrieben. Als Meßfehler wird hier die Abweichung des Potentials durch die Zugabe eines Fremdions bezeichnet.

Die erfindungsgemäße Elektrode weist einen Meßfehler von 10 % nach Zugabe von 7 bis 8•$10^{-3}$ mol/l KBr auf. Für die nitratsensitive Elektrode von Ingold ist diese Konzentration 8•$10^{-4}$ mol/l KBr.

**Patentansprüche**

1. Nitratselektive Anionenaustauscher-Membran aus einem polymeren Material, dadurch **gekennzeichnet,** daß in einer Grundstruktur aus hydrophobem polymerem Material ein anionisches Komplexion vom Typ [ $Me(NO_3)_6]^{2-}$ vorliegt, worin Me ein vierwertiges Metallion bedeutet.

2. Membran nach Anspruch 1, dadurch **gekennzeichnet,** daß das vierwertige Metallion $U^{4+}$, $Ce^{4+}$ oder $Th^{4+}$ ist.

3. Verwendung der Membran nach mindestens einem der Ansprüche 1 und 2 in $NO_3^-$ -sensitiven Elektroden.

Abb.1: Potential einer nitratselektiven Membran als Funktion der $KNO_3$ - Konzentration

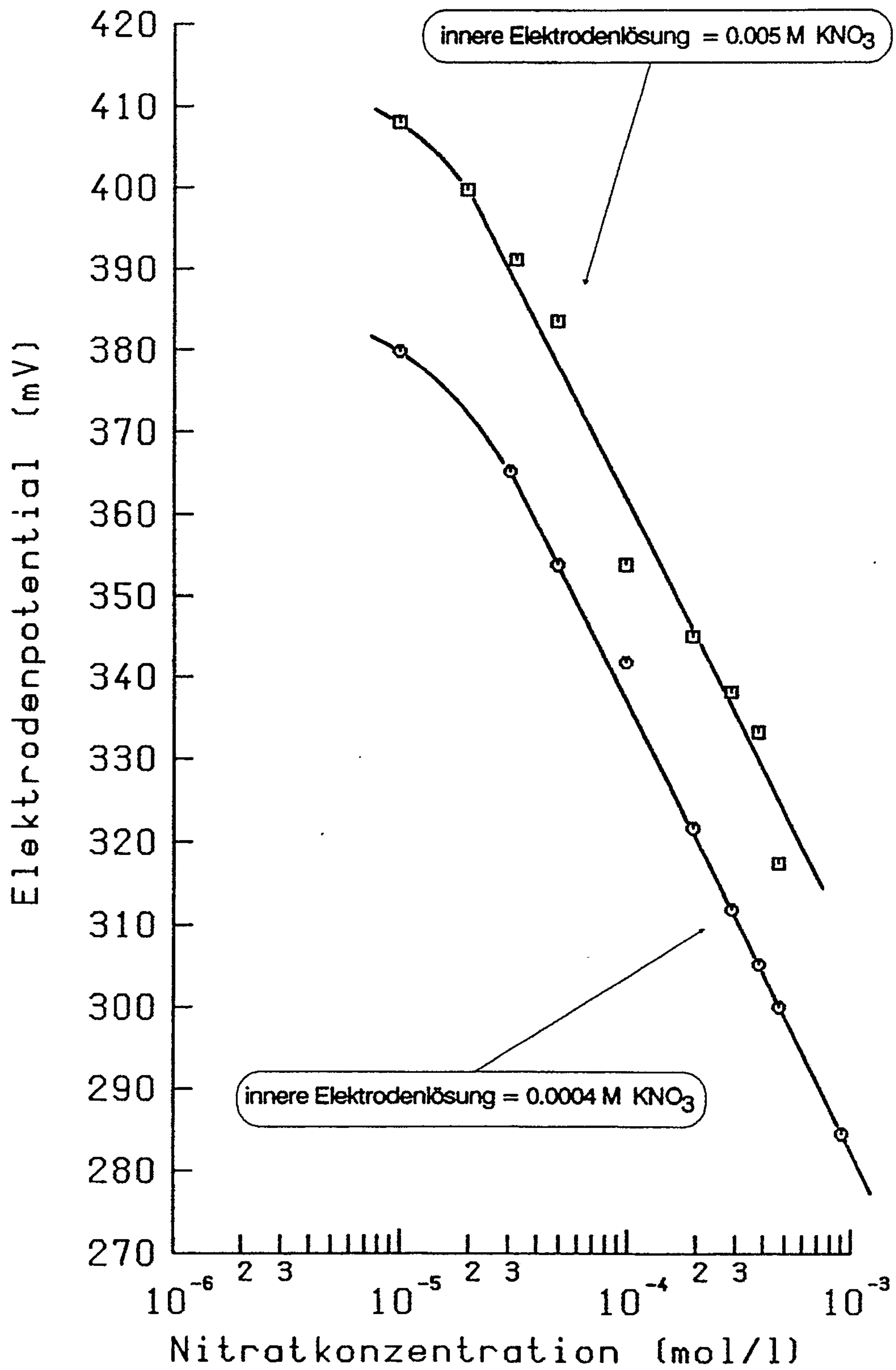

Abb.2: Potential einer nitratsensitiven Elektrode als Funktion der Konzentration von Interferenzionen

- ⚬ Einfluß von KBr bei $2 \times 10^{-3}$ M $KNO_3$
- ◘ Einfluß von KCl bei $1 \times 10^{-4}$ M $KNO_3$
- ▲ Einfluß von KBr bei $1 \times 10^{-4}$ M $KNO_3$